(19)

Europäisches Patentamt

European Patent Office

Office européen des brevets

(11) **EP 4 306 565 A1**

(12) **EUROPEAN PATENT APPLICATION**

(43) Date of publication:
**17.01.2024  Bulletin 2024/03**

(21) Application number: **22306044.3**

(22) Date of filing: **11.07.2022**

(51) International Patent Classification (IPC):
**C08G 18/75** *(2006.01)*    **C08G 18/42** *(2006.01)*
**C09J 175/06** *(2006.01)*    **B32B 7/12** *(2006.01)*
**C08G 18/12** *(2006.01)*

(52) Cooperative Patent Classification (CPC):
(C-Sets available)
**C08G 18/755; B32B 27/08; B32B 27/40;**
**C08G 18/12; C08G 18/4219; C08G 18/4238;**
**C08G 18/4241; C09J 175/06;** B32B 2439/70

(Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Bostik SA**
**92700 Colombes (FR)**

(72) Inventors:
• **LI, Zhuang**
  **SHANGHAI, 201108 (CN)**
• **WENG, Chengfei**
  **SHANGHAI, 201108 (CN)**

(74) Representative: **Arkema Patent**
**Arkema France**
**DRD-DPI**
**420, rue d'Estienne d'Orves**
**92705 Colombes Cedex (FR)**

(54) **TWO-COMPONENT COMPOSITION**

(57)     The invention relates to a two-component composition comprising:
- a component A comprising a reaction product obtained by reacting at least:
- an aliphatic polyisocyanate, and
- a crystalline polyester polyol having a number average molecular weight of less than 3000 g/mol; and

- a component B comprising:
- at least one polyester polyol,
- a chain extender, and
- a silane coupling agent.

Furthermore, the invention relates to the use of the composition according to the invention, as an adhesive to manufacture an article having a bonding strength value after sterilization greater than or equal to 3.5 N/15mm.

The invention also relates to a multilayer film comprising at least two layers of substrates bonded together by a continuous layer, wherein said continuous layer consists of the two-component composition according to the invention.

The invention also relates to the use of the multilayer film according to the invention for the manufacture of flexible packaging intended for sterilization treatments.

EP 4 306 565 A1

(52) Cooperative Patent Classification (CPC): (Cont.)

C-Sets
**C08G 18/12, C08G 18/289;**
**C08G 18/12, C08G 18/6644**

**Description**

TECHNICAL FIELD

The present invention relates to a two-component composition and its use, and a multilayer film and its use.

TECHNICAL BACKGROUND

Flexible packaging, in particular for food packaging, generally consists of several thin layers (in the form of sheets or films), which can be obtained from different materials, such as paper, metal (for example aluminum) or also thermoplastic polymers. These thin layers are bonded together by an adhesive layer, and the corresponding multilayer film makes it possible to combine the properties of the different individual layers of material (also described as "supports") and to thus offer the consumer a set of features adapted to the final flexible packaging, such as:

- its visual appearance (in particular that of the printed elements presenting the information concerning the packaged product intended for the consumer, or also its transparency),
- a barrier effect to light or to atmospheric moisture or to gases, in particular to oxygen,
- contact with food without risk of toxicity or of modification to the organoleptic properties of the packaged foodstuffs,
- chemical resistance for certain products, such as ketchup, and
- appropriate thermal resistance.

Such thermal resistance is understood to mean the maintenance of the cohesion of the multilayer film when it is exposed to high temperatures, and in particular the absence of separation between the thin layers bonded by the adhesive layer. Such a separation is generally denoted by the term "delamination".

This thermal resistance is necessary for closing the packaging (for example, around a foodstuff). This closing generally comprises a heat-sealing step, during which the film of the packaging is subjected for a few seconds to a temperature of between 120°C and 250°C.

This thermal resistance is also necessary for a packaging which is submitted to a sterilization treatment, in particular for a food packaging. Indeed, such a treatment exposes the multilayer film of the packaging to a temperature of between 100°C and 135°C for a period of time generally greater than that of the heat-sealing, which can range up to an hour.

Two-component polyurethane-type compositions are widely used as adhesives for the manufacture of multilayer films intended for the field of flexible packaging. These two-component compositions comprise:

- a -NCO component comprising chemical entities carrying isocyanate (i.e.-NCO) groups, and
- an -OH component comprising chemical entities carrying hydroxyl (i.e. - OH) groups.

After mixing these two components, the isocyanate groups of the -NCO component react with the hydroxyl groups of the -OH component, according to a reaction referred to as crosslinking, to form a polyurethane which exists in the form of a three-dimensional network comprising urethane groups, providing the cohesion of the adhesive layer between the layers of the multilayer film.

The chemical entities present in the -NCO component are generally polymeric chemical compounds which are called prepolymers since they are precursors of the constituent final crosslinked polyurethane of the adhesive layer. These prepolymers comprising -NCO groups are generally themselves polyurethanes produced by the polyaddition reaction of a molar excess of a polyisocyanate monomer, which is generally aromatic, such as diphenylmethane diisocyanate (MDI) or toluene diisocyanate (TDI), with one or more polyols.

However, due to the specificity of this polyaddition reaction and due to the presence of the molar excess of the polyisocyanate, a certain amount of unreacted polyisocyanate monomer remains in the -NCO component thus obtained. These residual amounts of ("free") aromatic polyisocyanate monomers are capable of migrating through the multilayer film, after the use of the two-component composition, and thus through the final packaging. Thus, said monomers can form primary aromatic amines (PAAs) by hydrolysis, on contact with the water or the moisture present in particular in the air or in packaged foods. These PAAs are regarded as being very harmful to human health and the environment.

Therefore, it is an aim of the present invention to provide a two-component composition which can be implemented in a multilayer film without the risk of subsequent formation of primary aromatic amines.

In addition, there is an increasing need for solvent-free adhesives for environment, efficiency and cost reasons. Furthermore, GLYMO ((3-glycidyloxypropyl)trimethoxysilane) and generally epoxysilanes are also considered as being harmful to human health.

Therefore, another aim of the invention is to provide a two-component composition which is solvent-free and/or GLYMO-free, more generally epoxysilane-free.

Another aim of the invention is to provide a two-component composition which can be used as an adhesive layer in a multilayer film and which can lead to a multilayer film having good thermal properties, in particular high bonding strength values after sterilization.

It has now been found that these aims can be achieved by the two-component composition described below.

## SUMMARY OF THE INVENTION

The invention relates a two-component composition comprising:

- a component A comprising a reaction product obtained by reacting at least:

  - an aliphatic polyisocyanate, and
  - a crystalline polyester polyol having a number average molecular weight of less than 3000 g/mol; and

- a component B comprising:

  - at least one polyester polyol,
  - a chain extender, and
  - a silane coupling agent.

The invention also relates to an article, in particular a multilayer film, comprising at least one surface coated with the two-component composition according to the invention.

Furthermore, the invention relates to the use of the composition according to the invention, as an adhesive to manufacture an article, in particular a multilayer film, having a bonding strength value after sterilization greater than or equal to 3.5 N/15mm.

The invention also aims at providing a multilayer film comprising at least two layers of substrates bonded together by a continuous layer, wherein said continuous layer consists of the two-component composition according to the invention.

Finally, the invention relates to the use of the multilayer film according to the invention for the manufacture of flexible packaging intended for sterilization treatments, such as the sterilization of foodstuffs put in said flexible packaging.

The present invention makes it possible to address the needs mentioned above. In particular, the two-component composition according to the invention surprisingly provide multilayer films having good thermal properties, especially high bonding strength values after sterilization, while avoiding the risk of formation of primary aromatic amines. Furthermore, the two-component composition according to the invention can advantageously be implemented without the need for solvent or epoxysilane.

## DESCRIPTION OF THE INVENTION

The invention relates to a two-component composition comprising:

- a component A comprising a reaction product obtained by reacting at least:

  - an aliphatic polyisocyanate, and
  - a crystalline polyester polyol having a number average molecular weight of less than 3000 g/mol; and

- a component B comprising:

  - at least one polyester polyol,
  - a chain extender, and
  - a silane coupling agent.

**Component A**

**Aliphatic polyisocyanate**

By "aliphatic polyisocyanate", it is intended a compound having at least two isocyanate (i.e. -NCO) groups, wherein none nitrogen atom of the -NCO groups is directly linked by a covalent bond to a carbon atom being part of an aromatic hydrocarbon cycle. For example, m-xylylene diisocyanate (m-XDI) is an aliphatic polyisocyanate according to the invention. Furthermore, the aliphatic polyisocyanate does not comprise carbamate groups.

Therefore, by "aromatic polyisocyanate", it is intended a compound having at least two isocyanate (i.e. -NCO) groups, wherein at least one nitrogen atom of the -NCO groups is directly linked by a covalent bond to a carbon atom being part of an aromatic hydrocarbon cycle.

The aliphatic polyisocyanate has a functionality of at least 2, meaning that the number of -NCO groups per molecule of polyisocyanate is of at least 2. Preferably, the aliphatic polyisocyanate has a functionality equal to 2, meaning that the aliphatic polyisocyanate is a diisocyanate.

Advantageously, the aliphatic polyisocyanate is selected from isophorone diisocyanate (IPDI), dicyclohexylmethane 4,4'-diisocyanate (H12MDI), 1,4-cyclohexylene diisocyanate, 1,2-cyclohexylene diisocyanate, 2,4-diisocyanato-1-methylcyclohexane, 1,3-diisocyanato-2-methylcyclohexane, meta-xylylene diisocyanate (m-XDI), hydrogenated meta-xylylene diisocyanate (m-H6XDI), tetramethylxylene diisocyanate (TMXDI), 1,2-ethylene diisocyanate, 1,3-propylene diisocyanate, 1,4-butylene diisocyanate, 1,5-pentamethylene diisocyanate (PDI), 1,6-hexamethylene diisocyanate (HDI) and mixtures thereof.

Preferably, the aliphatic polyisocyanate is selected from isophorone diisocyanate, dicyclohexylmethane 4,4'-diisocyanate, 1,4-cyclohexylene diisocyanate, 2,4-diisocyanato-1-methylcyclohexane, 1,3-diisocyanato-2-methylcyclohexane and mixtures thereof, more preferably is isophorone diisocyanate.

The content of aliphatic polyisocyanate implemented for obtaining the reaction product in component A may vary from 30 % to 90 % by dry weight relative to the total dry weight of component A, preferably from 40 % to 80 % by dry weight, more preferably from 50 % to 70 % by dry weight.

By "dry weight of X", it is intended the weight of X, without taking into account the weight of a possible solvent that may be comprised in X. Solvents are well known by the skilled person and include, for example, water, ethanol, isopropanol, ethyl acetate, butyl acetate, acetone, butanone, methyl isobutyl ketone, tetrahydrofuran, cyclohexane, benzene, toluene, xylene, etc.

In the context of the invention, the ranges of values are understood to be inclusive. For example, the range "between 0% and 25%" includes in particular the values 0% and 25%.

Advantageously, no aromatic polyisocyanate is implemented for obtaining the reaction product in component A. Furthermore, component A is advantageously free of aromatic polyisocyanates.

**Crystalline polyester polyol in component A**

By "crystalline polyester polyol", it is intended a polyester polyol having a degree of crystallinity of at least 20%, whereas a "non-crystalline polyester polyol" is a polyester polyol having a degree of crystallinity of less than 20%. The degree of crystallinity means the degree of regular and structural order in a material or a molecular structure. In this present application, the degree of crystallinity is preferably measured by Wide Angle X-ray Diffraction (WAXD) and according to the following calculation formula, which is known in the art:

$$ Xcw = \frac{Ic}{Ic + Iw} \times 100\% $$

wherein:

- Xcw is the degree of crystallinity determined by X-ray diffraction;
- Ic is the crystal diffraction peak intensity;
- Ia is the amorphous dispersion peak intensity.

For example, the degree of crystallinity can be determined automatically with Rigaku SmartLab X-ray diffractometer.

By "polyester polyol", it is intended a polymer comprising at least two hydroxy (-OH) groups and at least two ester groups. Preferably, the polyester polyol comprises a main chain comprising ester bonds and extremities comprising hydroxy groups. More preferably, the polyester polyol comprises primary hydroxy groups, i.e. hydroxy groups bonded to a carbon atom having exactly one substituent other than hydrogen atoms (and other than said hydroxy groups).

The crystalline polyester polyol in component A may be obtained by reacting at least one polyol with at least one polycarboxylic acid or a ester-forming derivative thereof, which is able to form an ester bond after reacting with a hydroxy group (such as an anhydride or acyl halide thereof).

The molar ratio of the at least one polyol with respect to the at least one polycarboxylic acid may be equal to 1, preferably is comprised between 1.02 and 1.7, more preferably between 1.05 and 1.5.

The polycarboxylic acid may be aliphatic or may comprise one or more aromatic rings, preferably the polycarboxylic acid is aliphatic.

Advantageously, the polycarboxylic acid is selected from succinic acid, glutaric acid, adipic acid, pimelic acid, suberic acid, azelaic acid, sebacic acid, 1,12-dodecanedioic acid, fumaric acid or dimer thereof, maleic acid or dimer thereof, 1,4-cyclohexanedicarboxylic acid, isophthalic acid, phthalic acid, terephthalic acid, ester-forming derivatives thereof and mixtures thereof.

Preferably, the polycarboxylic acid is selected from succinic acid, glutaric acid, adipic acid, pimelic acid, suberic acid, azelaic acid, sebacic acid, 1,12-dodecanedioic acid, fumaric acid or dimer thereof, maleic acid or dimer thereof, 1,4-cyclohexanedicarboxylic acid, ester-forming derivatives thereof and mixtures thereof.

More preferably, the polycarboxylic acid is selected from succinic acid, glutaric acid, adipic acid, pimelic acid, suberic acid, azelaic acid, sebacic acid, 1,12-dodecanedioic acid, ester-forming derivatives thereof and mixtures thereof.

Even more preferably, the polycarboxylic acid is selected from adipic acid, suberic acid, sebacic acid, 1,12-dodecanedioic acid, ester-forming derivatives thereof and mixtures thereof, in particular adipic acid.

The polyol may be aliphatic or may comprise one or more aromatic rings, preferably the polyol is aliphatic.

The polyol may be selected from ethylene glycol, diethylene glycol, triethylene glycol, tetraethylene glycol, 1,2-propanediol (propylene glycol), 1,3-propanediol, dipropylene glycol, tripropylene glycol, tetrapropylene glycol, 1,2-butanediol, 1,3-butanediol, 1,4-butanediol, 1,6-hexanediol, 3-ethyl-2-methyl-1,5-pentanediol, 2-ethyl-3-propyl-1,5-pentanediol, 2,4-dimethyl-3-ethyl-1,5-pentanediol, 2-ethyl-4-methyl-3-propyl-1,5-pentadiol, 2,3-diethyl-4-methyl-1,5-pentanediol, 3-ethyl-2,2,4-trimethyl-1,5-pentadiol, 2,2-dimethyl-4-ethyl-3-propyl-1,5-pentanediol, 2-methyl-2-propyl-1,5-pentanediol, 2,4-dimethyl-3-ethyl-2-propyl-1,5-pentanediol, 2,3-dipropyl-4-ethyl-2-methyl-1,5-pentanediol, 2-butyl-2-ethyl-1,5-pentanediol, 2-butyl-2,3-diethyl-4-methyl-1,5-pentanediol, 2-butyl-2,4-diethyl-3-propyl-1,5-pentanediol, 3-butyl-2-propyl-1,5-pentanediol, 2-methyl-1,5-pentanediol, 3-methyl-1,5-pentanediol, 2,2-dimethyl-1,3-pentanediol, 2,2-dimethyl-1,5-pentanediol, 3,3-dimethyl-1,5-pentanediol, 2,3-dimethyl-1,5-pentanediol, 2,2-dimethyl-1,3-propanediol (neopentylglycol), 2,2-diethyl-1,3-propanediol, 2-methyl-2-propyl-1,3-propanediol, 2-butyl-2-ethyl-1,3-propanediol, 2-methyl-1,3-propanediol, 2-benzyloxy-1,3-propanediol, 2,2-dibenzyl-1,3-propanediol, 2,2-dibutyl-1,3-propanediol, 2,2-diisobutyl-1,3-propanediol, 2,4-diethyl-1,5-pentanediol, 2-ethyl-1,6-hexanediol, 2,5-dimethyl-1,6-hexanediol, 5-methyl-2-(1-methylethyl)-1,3-hexanediol, 1,4-dimethyl-1,4-butanediol, 1,5-hexanediol, 3-methyl-1,6-hexanediol, 3-tert-butyl-1,6-hexanediol, 1,3-heptanediol, 1,2-octanediol, 1,3-octanediol, 2,2,7,7-tetramethyl-1,8-octanediol, 2-methyl-1,8-octanediol, 2,6-dimethyl-1,8-octanediol, 1,7-octanediol, 4,4,5,5-tetramethyl-3,6-dioxa-1,8-octanediol, 2,2,8,8-tetramethyl-1,9-nonanediol, 1,2-nonanediol, 2,8-dimethyl-1,9-nonanediol, 1,5-nonanediol, 2,9-dimethyl-2,9-dipropyl-1,10-decanediol, 2,9-dibutyl-2,9-dimethyl-1,10-decanediol, 2,9-dimethyl-2,9-dipropyl-1,10-decanediol, 2,9-diethyl-2,9-dimethyl-1,10-decanediol, 2,2,9,9-tetramethyl-1,10-decanediol, 2-nonyl-1,10-decanediol, 1,9-decanediol, 2,2,6,6,10,10-hexamethyl-4,8-dioxa-1,11-undecanediol, 2-octyl-1,11-undecanediol, 2,10-diethyl-2,10-dimethyl-1,11-undecanediol, 2,2,10,10-tetramethyl-1,11-undecanediol, 1-phenyl-1,11-undecanediol, 1,2-undecanediol, 1,2-dodecanediol, 2,11-dodecanediol, 2,11-diethyl-2,11-dimethyl-1,12-dodecanediol, 2,11-dimethyl-2,11-dipropyl-1,12-dodecanediol, 2,11-dibutyl-2,11-dimethyl-1,12-dodecanediol, 2,2,11,11-tetramethyl-1,12-dodecanediol, 1,11-dodecanediol, 11-methyl-1,7-dodecanediol, 1,4-dodecanediol, 1,3-dodecanediol, 1,10-dodecanediol, 2,11-dimethyl-2,11-dodecanediol, 1,5-dodecanediol, 6,7-dodecanediol, 2,2-bis(4-hydroxyphenyl)propane (bisphenol A), 1,4-cyclohexanediol, 1,4-cyclohexanedimethanol and mixtures thereof.

Advantageously, the polyol is selected from ethylene glycol, diethylene glycol, triethylene glycol, propylene glycol, 1,3-propanediol, dipropylene glycol, 1,2-butanediol, 1,3-butanediol, 1,4-butanediol, 1,6-hexanediol, neopentylglycol, bisphenol A, 1,4-cyclohexanediol, 1,4-cyclohexanedimethanol and mixtures thereof.

Preferably, the polyol is selected from ethylene glycol, diethylene glycol, triethylene glycol, propylene glycol, 1,3-propanediol, dipropylene glycol, 1,4-butanediol, 1,6-hexanediol, neopentylglycol, 1,4-cyclohexanediol and mixtures thereof.

More preferably, the polyol is selected from ethylene glycol, 1,4-butanediol, 1,6-hexanediol and mixtures thereof, in particular 1,4-butanediol.

According to an embodiment, the crystalline polyester polyol in component A is obtained by reacting:

- a polycarboxylic acid selected from succinic acid, glutaric acid, adipic acid, pimelic acid, suberic acid, azelaic acid, sebacic acid, 1,12-dodecanedioic acid, fumaric acid or dimer thereof, maleic acid or dimer thereof, 1,4-cyclohexanedicarboxylic acid, isophthalic acid, phthalic acid, terephthalic acid, ester-forming derivatives thereof and mixtures thereof, and
- a polyol selected from ethylene glycol, diethylene glycol, triethylene glycol, propylene glycol, 1,3-propanediol, dipropylene glycol, 1,2-butanediol, 1,3-butanediol, 1,4-butanediol, 1,6-hexanediol, neopentylglycol, bisphenol A, 1,4-cyclohexanediol, 1,4-cyclohexanedimethanol and mixtures thereof.

Preferably, the crystalline polyester polyol in component A is obtained by reacting:

- a polycarboxylic acid selected from adipic acid, suberic acid, sebacic acid, 1,12-dodecanedioic acid, ester-forming derivatives thereof and mixtures thereof, and
- a polyol selected from ethylene glycol, 1,4-butanediol, 1,6-hexanediol and mixtures thereof.

More preferably, the crystalline polyester polyol in component A is obtained by reacting adipic acid (or an ester-forming derivative thereof) and 1,4-butanediol.

Advantageously, the crystalline polyester polyol in component A has a number average molecular weight from 400 g/mol to 2500 g/mol, preferably from 500 g/mol to 2200 g/mol, more preferably from about 700 g/mol to about 2000 g/mol.

The number average molecular weight can be measured by size exclusion chromatography (or SEC), which is also denoted by the term "gel permeation chromatography" (or GPC), preferably with a polystyrene calibration.

The crystalline polyester polyol in component A may have a functionality comprised between 2 and 4, preferably between 2 and 3, more preferably 2; the "functionality" of the crystalline polyester polyol means the number (or the average number) of hydroxy groups per molecule of crystalline polyester polyol. Said functionality (f) can be determined by measuring the average number molecular weight (Mn) and the hydroxyl (OH) value of the crystalline polyester polyol according to the formula: $f= (Mn*OH\ value)/(56.1*1000)$, wherein Mn is in g/mol and OH value is in mg KOH/g.

The crystalline polyester polyol used in component A may have a hydroxyl value comprised between 45 and 300 mg KOH/g (KOH milligrams per gram of crystalline polyester polyol), and preferably from 50 to 200 mg KOH/g. The hydroxyl value is preferably measured according to ISO 14900-17 (method A).

The crystalline polyester polyol in component A may be obtained by reacting the at least one polyol with the at least one polycarboxylic acid (or a ester-forming derivative thereof) as described above, preferably in the presence of catalyst (such as a titanium-based or a zinc-based catalyst, for example tetra-n-butyl titanate), and heating at a temperature that can range up to 250°C, preferably ranging from 120°C to 240°C, to eliminate the water formed (or the alcohol resulting from transesterification if a ester-forming derivative was implemented). When most of the water has been eliminated (such as at least 95% of the theoretical amount), the pressure is lowered to less than 95 kPa, preferably between about 80 kPa and about 90 kPa. The reaction is preferably stopped when the acid value is lower than 2 mg KOH/g (KOH milligrams per gram of reaction mixture).

The acid value can be measured according to ISO 2114-2000 (method A).

The content of crystalline polyester polyol implemented for obtaining the reaction product in component A may vary from 1 % to 40 % by dry weight relative to the total dry weight of component A, preferably from 2 % to 20 % by dry weight, more preferably from 5 % to 15 % by dry weight, such as about 9 % by dry weight.

By "about X", it is intended more or less 10% the value of X.

## Polyether polyol in component A

Advantageously, the reaction product in component A is obtained by reacting the aliphatic polyisocyanate and the crystalline polyester polyol at least also with a polyether polyol.

By "polyether polyol", it is intended a polymer comprising at least two hydroxy (-OH) groups and at least two ether groups, said polymer comprising at least three repeating units. Preferably, the polyether polyol comprises a main chain comprising ether bonds and extremities comprising hydroxy groups. More preferably, the polyether polyol comprises secondary hydroxy groups, i.e. hydroxy groups bonded to a carbon atom having exactly two substituents other than hydrogen atoms (and other than said hydroxy groups).

The polyether polyol in component A may be obtained by polymerization of one or more epoxides. Such epoxides may be ethylene oxide, propylene oxide, butylene oxide, tetrahydrofuran, styrene oxide and/or epichlorohydrin.

Therefore, the polyether polyol may be selected from polyethylene glycol, polypropylene glycol, polybutylene oxide, poly(tetramethylene ether) glycol (PTMEG), poly(styrene oxide), poly(epichlorohydrin) and copolymers thereof such as block copolymer of polyethylene glycol and polypropylene glycol.

Advantageously, the polyether polyol is selected from polyethylene glycol, polypropylene glycol, PTMEG and copolymers thereof such as block copolymer of polyethylene glycol and polypropylene glycol.

Preferably, the polyether polyol is selected from polyethylene glycol and polypropylene glycol.

More preferably, the polyether polyol is polypropylene glycol.

The polyether polyol in component A may have a number average molecular weight from 250 g/mol to 2500 g/mol, preferably from 300 g/mol to 2000 g/mol, more preferably from about 400 g/mol to about 1000 g/mol, such as about 400 g/mol.

In addition, the polyether polyol in component A may have a functionality comprised between 2 and 4, preferably between 2 and 3, more preferably 2; the "functionality" of the polyether polyol means the number (or the average number) of hydroxy groups per molecule of polyether polyol.

The content of polyether polyol implemented for obtaining the reaction product in component A may vary from 5 % to 50 % by dry weight relative to the total dry weight of component A, preferably from 15 % to 40 % by dry weight, more preferably from 20 % to 35 % by dry weight.

**Low molecular weight polyol in component A**

Advantageously, the reaction product in component A is obtained by reacting the aliphatic polyisocyanate and the crystalline polyester polyol at least also with a low molecular weight polyol.

By "low molecular weight polyol", it is meant a polyol other than the crystalline polyester polyol and the polyether polyol as described above, and having a molecular weight lower than 300 g/mol. In particular, the low molecular weight polyol does not comprise more than two repeating units.

Advantageously, the low molecular weight polyol has a molecular weight comprised between 50 g/mol and 250 g/mol, preferably between 60 g/mol and 200 g/mol, more preferably between 80 g/mol and 200 g/mol.

The low molecular weight polyol may be selected from 1,4-butanediol, ethylene glycol, diethylene glycol, 1,6-hexanediol, 1,2,3-propanetriol, trimethylolethane, trimethylolpropane, 1,2,6-hexanetriol, triethanolamine, diethanolamine and mixtures thereof.

Advantageously, the low molecular weight polyol is selected from 1,4-butanediol, ethylene glycol, diethylene glycol, 1,6-hexanediol and mixtures thereof, in particular 1,4-butanediol.

The low molecular weight polyol in component A may have a functionality comprised between 2 and 4, preferably between 2 and 3, more preferably 2; the "functionality" of the low molecular weight polyol means the number of hydroxy groups per molecule of low molecular weight polyol.

The content of low molecular weight polyol implemented for obtaining the reaction product in component A may vary from 0.1 % to 15 % by dry weight relative to the total dry weight of component A, preferably from 0.5 % to 10 % by dry weight, more preferably from 0.5 % to 5 % by dry weight.

**Silane coupling agent in component A**

The component A may further comprise a silane coupling agent. Silane coupling agents are well known by the skilled person and generally used as adhesion promoters.

By "silane coupling agent", it is intended a compound comprising at least one alkoxysilane group (silicon atom linked to at least one alkoxy group) wherein the silicon atom is linked to a hydrocarbon radical which may comprise one or more heteroatoms. Preferably, the silane coupling agent in component A is not an epoxy silane compound, such as (3-glycidyloxypropyl)trimethoxysilane (GLYMO).

The silane coupling agent in component A may comprise between 1 and 5 alkoxysilane groups, preferably one or two alkoxysilane groups. Each silicon atom is linked to at least one alkoxy group, preferably to at least two alkoxy groups, more preferably to three alkoxy groups. The alkoxy groups may comprise from 1 to 10 carbon atoms, preferably from 1 to 5 carbon atoms, more preferably they can be selected from a methoxy group and an ethoxy group.

Advantageously, the silane coupling agent in component A is an amino-silane compound.

By "amino-silane compound", it is meant a compound comprising at least one alkoxysilane group wherein the silicon atom is linked to at least one amino group via a hydrocarbon chain. The amino group should have at least one hydrogen atom. Therefore, the amino group is a primary or a secondary amine, preferably a secondary amine in component A.

In addition, the amino-silane compound may comprise between 1 and 5 amino groups, preferably one or two amino groups. In case more than one amino groups are present on the amino-silane compound, one amino group can be for example a primary amine while another amino group can be a secondary amine.

The amino group is linked to the silicon atom via a hydrocarbon chain. The hydrocarbon chain can comprise from 1 to 20 carbon atoms, preferably from 2 to 10 carbon atoms. The amino group(s) can be part of the hydrocarbon chain (two of the amines substituents are part of the hydrocarbon chain) and/or can be a terminal group (extremity) of the hydrocarbon chain.

According to an embodiment, the silane coupling agent in component A is selected from 1,2-bis(triethoxysilyl)ethane, n-octyltriethoxysilane, 3-aminopropylmethyldiethoxysilane, (3-aminopropyl)triethoxysilane, N-(2-aminoethyl)-3-aminopropyltriethoxysilane, bis(3-(triethoxysilyl)propyl)amine, bis(trimethoxysilylpropyl)amine, (3-aminopropyl)trimethoxysilane, N-(2-aminoethyl)-3-aminopropyltrimethoxysilane, 3-[2-(2-aminoethylamino)ethylamino]propyltrimethoxysilane, 4-amino-3,3-dimethylbutyltrimethoxysilane and mixtures thereof.

Preferably, the silane coupling agent in component A is selected from 3-aminopropylmethyldiethoxysilane, (3-aminopropyl)triethoxysilane, N-(2-aminoethyl)-3-aminopropyltriethoxysilane, bis(3-(triethoxysilyl)propyl)amine, bis(trimethoxysilylpropyl)amine, (3-aminopropyl)trimethoxysilane, N-(2-aminoethyl)-3-aminopropyltrimethoxysilane, 3-[2-(2-aminoethylamino)ethylamino]propyltrimethoxysilane, 4-amino-3,3-dimethylbutyltrimethoxysilane and mixtures thereof.

More preferably, the silane coupling agent in component A is selected from bis(3-(triethoxysilyl)propyl)amine, bis(trimethoxysilylpropyl)amine and mixture thereof, in particular bis(trimethoxysilylpropyl)amine.

The silane coupling agent content in component A may vary from 0.01 % to 5 % by dry weight relative to the total dry weight of component A, preferably from 0.1 % to 3 % by dry weight, more preferably from 0.5 % to 2 % by dry weight.

**Other features of component A**

The component A may further comprise one or more additives. Such additives may be selected from catalysts, fillers, plasticizers, tackifying resins, UV stabilizers, moisture absorbers, rheological additives and mixtures thereof. These additives may be introduced in component A before, simultaneously or after obtaining the reaction product in component A. In particular, catalysts are preferably added before or simultaneously to the ingredients implemented to obtain the reaction product in component A.

The catalyst may be selected from tetra-n-butyl titanate, ethylene glycol titanium, antimony trioxide, tetraisopropyl titanate and zinc acetate, preferably tetra-n-butyl titanate.

When a catalyst is added in component A, the catalyst content in component A may vary from 0.01 % to 0.05 % by dry weight relative to the total dry weight of component A.

The total content of additives in component A can range up to 10 % by dry weight relative to the total dry weight of component A, preferably up to 5 % by dry weight, more preferably up to 2 % by dry weight.

The component A may further comprise a solvent, but the component A is preferably solvent-free.

By "solvent", it is intended a solvent used in the field of adhesives, in particular, water, ethanol, isopropanol, ethyl acetate, butyl acetate, acetone, butanone, methyl isobutyl ketone, tetrahydrofuran, cyclohexane, benzene, toluene, xylene, etc.

According to a preferred embodiment, the reaction product in component A is obtained by reacting the aliphatic polyisocyanate and the crystalline polyester polyol with the polyether polyol and/or the low molecular weight polyol, preferably at least with the polyether polyol, more preferably with the polyether polyol and the low molecular weight polyol.

According to an embodiment, component A comprises:

- a reaction product obtained by reacting:

  - from 30 % to 90 % by dry weight of aliphatic polyisocyanate,
  - from 1 % to 40 % by dry weight of crystalline polyester polyol having a number average molecular weight of less than 3000 g/mol,
  - from 5 % to 50 % by dry weight of polyether polyol, and
  - from 0.1 % to 15 % by dry weight of low molecular weight polyol,

- optionally from 0.01 % to 5 % by dry weight of silane coupling agent, and
- up to 10 % by dry weight of one or more additives selected from catalysts, fillers, plasticizers, tackifying resins, UV stabilizers, moisture absorbers, rheological additives and mixtures thereof,
  the percentages being relative to the total dry weight of component A.

Preferably, component A consists essentially of the above ingredients. By "consists essentially of", it is intended that component A comprises less than 5 % by dry weight of ingredients other than the above ingredients, relative to the total dry weight of component A, preferably less than 2 % by dry weight, more preferably less than 1 % by dry weight.

The ingredients of this embodiment and their specific contents are as described above, including the embodiments.

According to a specific embodiment, component A comprises:

- a reaction product obtained by reacting:

  - from 50 % to 70 % by dry weight of aliphatic polyisocyanate, the aliphatic polyisocyanate being preferably selected from isophorone diisocyanate, dicyclohexylmethane 4,4'-diisocyanate, 1,4-cyclohexylene diisocyanate, 2,4-diisocyanato-1-methylcyclohexane, 1,3-diisocyanato-2-methylcyclohexane and mixtures thereof,
  - from 5 % to 15 % by dry weight of crystalline polyester polyol having a number average molecular weight of less than 3000 g/mol, the crystalline polyester polyol being preferably obtained by reacting:

    - a polycarboxylic acid selected from adipic acid, suberic acid, sebacic acid, 1,12-dodecanedioic acid, ester-forming derivatives thereof and mixtures thereof, and
    - a polyol selected from ethylene glycol, 1,4-butanediol, 1,6-hexanediol and mixtures thereof,

- from 20 % to 35 % by dry weight of polyether polyol, the polyether polyol being preferably selected from polyethylene glycol, polypropylene glycol, PTMEG and copolymers thereof, and
- from 0.5 % to 5 % by dry weight of low molecular weight polyol, the low molecular weight polyol being preferably selected from 1,4-butanediol, ethylene glycol, diethylene glycol, 1,6-hexanediol and mixtures thereof,

- optionally from 0.5 % to 2 % by dry weight of silane coupling agent, the silane coupling agent being preferably an amino-silane compound, and
- up to 2 % by dry weight of one or more additives selected from catalysts, fillers, plasticizers, tackifying resins, UV stabilizers, moisture absorbers, rheological additives and mixtures thereof,

the percentages being relative to the total dry weight of component A.

Preferably, component A consists essentially of the above ingredients.

The ingredients of this embodiment and their specific contents are as described above, including the embodiments.

In order to make component A, the above-mentioned compounds can be mixed together, preferably under inert atmosphere such as nitrogen.

According to a preferred embodiment, the aliphatic polyisocyanate can first be mixed with the crystalline polyester polyol and optionally the polyether polyol and/or the low molecular weight polyol. At this time, the hydroxy groups of the crystalline polyester polyol, the polyether polyol and/or the low molecular weight polyol can react with the isocyanate groups of the polyisocyanate compound to form a polyurethane prepolymer comprising isocyanate extremities. Then, the silane coupling agent can optionally be added to this mixture. For example, the aliphatic polyisocyanate can be mixed with the crystalline polyester polyol and optionally the polyether polyol and/or the low molecular weight polyol for a duration comprised between 30 minutes and 4 hours, preferably between 1.5 and 3.5 hours, prior to the addition of the silane coupling agent.

A catalyst may be added in component A when mixing the aliphatic polyisocyanate with the crystalline polyester polyol and optionally the polyether polyol and/or the low molecular weight polyol, or after this step.

In addition, in case a polyether polyol and/or a low molecular weight polyol are implemented with the crystalline polyester polyol for the formation of the reaction product in component A, the polyols can be mixed together prior to the addition of the aliphatic polyisocyanate.

The reaction with the aliphatic polyisocyanate can take place at a temperature from 40°C to 100°C, preferably from 50°C to 90°C. The temperature may remain stable during the mixing of the different compounds implemented in component A or may vary during the mixing of the different compounds implemented in component A. According to the embodiment wherein a polyether polyol and/or a low molecular weight polyol are implemented with the crystalline polyester polyol for the formation of the reaction product in component A, the polyols can be mixed together at a temperature from 40°C to 65°C and, after the addition of the polyisocyanate compound, the temperature can be increased to from 70°C to 90°C. Prior to the mixture of component A with component B, it is preferable to cool down the temperature of component A at a temperature lower than or equal to 50°C.

Component A may have a NCO content comprised between 5 % and 40 % by weight based on the total weight of component A, preferably between 10 % and 30 % by weight, more preferably between 10 % and 20 % by weight.

The NCO content of component A may be measured according to the standard ASTM D2572 (2010).

Component A may also have a viscosity at 40°C comprised between 1000 mPa.s and 15000 mPa.s, preferably between 1500 mPa.s and 10000 mPa.s, more preferably between 2000 mPa.s and 5000 mPa.s. Viscosity can be measured using a Brookfield LVT viscometer and using the standard EN ISO 2555 (2018).

## Component B

### Polyester polyol in component B

By "polyester polyol", it is intended a polymer comprising at least two hydroxy (-OH) groups and at least two ester groups. Preferably, the polyester polyol comprises a main chain comprising ester bonds and extremities comprising hydroxy groups. More preferably, the polyester polyol comprises primary hydroxy groups, i.e. hydroxy groups bonded to a carbon atom having exactly one substituent other than hydrogen atoms (and other than said hydroxy groups).

The polyester polyol in component B may be as described above for the crystalline polyester polyol in component A. However, the polyester polyol present in component B is preferably different from the crystalline polyester polyol present in component A, in particular the polyester polyol in component B is preferably non crystalline.

The polyester polyol in component B may be obtained by reacting at least one polyol with at least one polycarboxylic acid or a ester-forming derivative thereof, which is able to form an ester bond after reacting with a hydroxy group (such as an anhydride or acyl halide thereof), and optionally with at least one fatty acid and/or triglyceride(s) thereof.

The molar ratio of the at least one polyol with respect to the at least one polycarboxylic acid may vary from 1 to 2, preferably from 1.05 to 2.0, more preferably from 1.2 to 1.8, even more preferably from 1.3 to 1.7.

When the polyester polyol in component B is obtained from at least one fatty acid and/or triglyceride(s) thereof, the molar ratio of the at least one polyol with respect to the at least one fatty acid and/or triglyceride(s) thereof may vary from 1 to 2, preferably from 1.05 to 2.0, more preferably from 1.2 to 1.8, even more preferably from 1.3 to 1.7.

The polycarboxylic acid may be aliphatic or may comprise one or more aromatic rings.

Advantageously, the polycarboxylic acid is selected from succinic acid, glutaric acid, adipic acid, pimelic acid, suberic acid, azelaic acid, sebacic acid, 1,12-dodecanedioic acid, fumaric acid or dimer thereof, maleic acid or dimer thereof, 1,4-cyclohexanedicarboxylic acid, isophthalic acid, phthalic acid, terephthalic acid, ester-forming derivatives thereof and mixtures thereof.

Preferably, the polycarboxylic acid is selected from succinic acid, glutaric acid, adipic acid, pimelic acid, suberic acid, azelaic acid, sebacic acid, isophthalic acid, phthalic acid, terephthalic acid, ester-forming derivatives thereof and mixtures thereof.

More preferably, the polycarboxylic acid is selected from glutaric acid, adipic acid, pimelic acid, azelaic acid, isophthalic acid, phthalic acid, terephthalic acid, ester-forming derivatives thereof and mixtures thereof, in particular adipic acid and/or isophthalic acid.

The polyol may be aliphatic or may comprise one or more aromatic rings, preferably the polyol is aliphatic. The polyol is not a fatty acid or a triglyceride thereof.

The polyol may be selected from ethylene glycol, diethylene glycol, triethylene glycol, tetraethylene glycol, 1,2-propanediol (propylene glycol), 1,3-propanediol, trimethylolpropane, dipropylene glycol, tripropylene glycol, tetrapropylene glycol, 1,2-butanediol, 1,3-butanediol, 1,4-butanediol, 1,6-hexanediol, 3-ethyl-2-methyl-1,5-pentanediol, 2-ethyl-3-propyl-1,5-pentanediol, 2,4-dimethyl-3-ethyl-1,5-pentanediol, 2-ethyl-4-methyl-3-propyl-1,5-pentadiol, 2,3-diethyl-4-methyl-1,5-pentanediol, 3-ethyl-2,2,4-trimethyl-1,5-pentadiol, 2,2-dimethyl-4-ethyl-3-propyl-1,5-pentanediol, 2-methyl-2-propyl-1,5-pentanediol, 2,4-dimethyl-3-ethyl-2-propyl-1,5-pentanediol, 2,3-dipropyl-4-ethyl-2-methyl-1,5-pentanediol, 2-butyl-2-ethyl-1,5-pentanediol, 2-butyl-2,3-diethyl-4-methyl-1,5-pentanediol, 2-butyl-2,4-diethyl-3-propyl-1,5-pentanediol, 3-butyl-2-propyl-1,5-pentanediol, 2-methyl-1,5-pentanediol, 3-methyl-1,5-pentanediol, 2,2-dimethyl-1,3-pentanediol, 2,2-dimethyl-1,5-pentanediol, 3,3-dimethyl-1,5-pentanediol, 2,3-dimethyl-1,5-pentanediol, 2,2-dimethyl-1,3-propanediol (neopentylglycol), 2,2-diethyl-1,3-propanediol, 2-methyl-2-propyl-1,3-propanediol, 2-butyl-2-ethyl-1,3-propanediol, 2-methyl-1,3-propanediol, 2-benzyloxy-1,3-propanediol, 2,2-dibenzyl-1,3-propanediol, 2,2-dibutyl-1,3-propanediol, 2,2-diisobutyl-1,3-propanediol, 2,4-diethyl-1,5-pentanediol, 2-ethyl-1,6-hexanediol, 2,5-dimethyl-1,6-hexanediol, 5-methyl-2-(1-methylethyl)-1,3-hexanediol, 1,4-dimethyl-1,4-butanediol, 1,5-hexanediol, 3-methyl-1,6-hexanediol, 3-tert-butyl-1,6-hexanediol, 1,3-heptanediol, 1,2-octanediol, 1,3-octanediol, 2,2,7,7-tetramethyl-1,8-octanediol, 2-methyl-1,8-octanediol, 2,6-dimethyl-1,8-octanediol, 1,7-octanediol, 4,4,5,5-tetramethyl-3,6-dioxa-1,8-octanediol, 2,2,8,8-tetramethyl-1,9-nonanediol, 1,2-nonanediol, 2,8-dimethyl-1,9-nonanediol, 1,5-nonanediol, 2,9-dimethyl-2,9-dipropyl-1,10-decanediol, 2,9-dibutyl-2,9-dimethyl-1,10-decanediol, 2,9-dimethyl-2,9-dipropyl-1,10-decanediol, 2,9-diethyl-2,9-dimethyl-1,10-decanediol, 2,2,9,9-tetramethyl-1,10-decanediol, 2-nonyl-1,10-decanediol, 1,9-decanediol, 2,2,6,6,10,10-hexamethyl-4,8-dioxa-1,11-undecanediol, 2-octyl-1,11-undecanediol, 2,10-diethyl-2,10-dimethyl-1,11-undecanediol, 2,2,10,10-tetramethyl-1,11 -undecanediol, 1-phenyl-1,11-undecanediol, 1,2-undecanediol, 1,2-dodecanediol, 2,11-dodecanediol, 2,11-diethyl-2,11-dimethyl-1,12-dodecanediol, 2,11-dimethyl-2,11-dipropyl-1,12-dodecanediol, 2,11-dibutyl-2,11-dimethyl-1,12-dodecanediol, 2,2,11,11-tetramethyl-1,12-dodecanediol, 1,11-dodecanediol, 11-methyl-1,7-dodecanediol, 1,4-dodecanediol, 1,3-dodecanediol, 1,10-dodecanediol, 2,11-dimethyl-2,11-dodecanediol, 1,5-dodecanediol, 6,7-dodecanediol, 2,2-bis(4-hydroxyphenyl)propane (bisphenol A), 1,4-cyclohexanediol, 1,4-cyclohexanedimethanol and mixtures thereof.

Advantageously, the polyol is selected from ethylene glycol, diethylene glycol, triethylene glycol, propylene glycol, 1,3-propanediol, trimethylolpropane, dipropylene glycol, 1,2-butanediol, 1,3-butanediol, 1,4-butanediol, 1,6-hexanediol, neopentylglycol, bisphenol A, 1,4-cyclohexanediol, 1,4-cyclohexanedimethanol and mixtures thereof.

Preferably, the polyol is selected from ethylene glycol, diethylene glycol, triethylene glycol, propylene glycol, 1,3-propanediol, trimethylolpropane, dipropylene glycol, 1,4-butanediol, 1,6-hexanediol, neopentylglycol, 1,4-cyclohexanediol and mixtures thereof.

More preferably, the polyol is selected from ethylene glycol, diethylene glycol, propylene glycol, trimethylolpropane, 1,4-butanediol, 1,6-hexanediol, neopentylglycol and mixtures thereof, in particular diethylene glycol and/or trimethylolpropane.

By "fatty acid", it is intended a compound having an aliphatic chain, which may comprise one or more double bond and/or one or more hydroxy groups, and a carboxylic acid group (-C(O)OH). In particular, the fatty acid comprises between 4 and 28 carbon atoms, preferably between 10 and 22 carbon atoms, more preferably between 16 and 20 carbon atoms, such as 18 carbon atoms.

Preferably, the at least one fatty acid comprises a fatty acid comprising one or more hydroxy groups.

By "triglyceride", it is intended a triester obtained from glycerol and three fatty acids, which may be identical or different.

The at least one fatty acid and/or triglyceride(s) thereof preferably comprises triglyceride(s) of the at least one fatty acid, wherein the at least one fatty acid preferably comprises a fatty acid comprising one or more hydroxy groups. In particular, the at least one fatty acid and/or triglyceride(s) thereof may be provided under the form of a vegetable oil, such as castor oil.

Advantageously, the at least one fatty acid and/or triglyceride(s) thereof comprises ricinoleic acid, preferably triglyceride(s) of at least one fatty acid comprising ricinoleic acid. In particular, the at least one fatty acid and/or triglyceride(s) thereof may be provided under the form of castor oil.

The at least one fatty acid and/or triglyceride(s) thereof may further comprise oleic acid, linoleic acid, $\alpha$-linoleic acid, palmitic acid and/or stearic acid, preferably oleic acid and/or linoleic acid.

According to a preferred embodiment, the at least one fatty acid and/or triglyceride(s) thereof comprises a mixture of fatty acids and/or a mixture of triglycerides of a mixture of fatty acids. Preferably, the at least one fatty acid and/or triglyceride(s) thereof comprises a mixture comprising ricinoleic acid, oleic acid and linoleic acid, and/or a mixture of triglycerides of fatty acids comprising ricinoleic acid, oleic acid and linoleic acid. More preferably, the at least one fatty acid and/or triglyceride(s) thereof comprises a mixture of triglycerides of fatty acids comprising ricinoleic acid, oleic acid and linoleic acid.

In particular, the at least one fatty acid and/or triglyceride(s) thereof may be provided under the form of castor oil.

According to an embodiment, the polyester polyol in component B is obtained by reacting:

- a polycarboxylic acid selected from succinic acid, glutaric acid, adipic acid, pimelic acid, suberic acid, azelaic acid, sebacic acid, 1,12-dodecanedioic acid, fumaric acid or dimer thereof, maleic acid or dimer thereof, 1,4-cyclohexanedicarboxylic acid, isophthalic acid, phthalic acid, terephthalic acid, ester-forming derivatives thereof and mixtures thereof, and
- a polyol selected from ethylene glycol, diethylene glycol, triethylene glycol, propylene glycol, 1,3-propanediol, trimethylolpropane, dipropylene glycol, 1,2-butanediol, 1,3-butanediol, 1,4-butanediol, 1,6-hexanediol, neopentylglycol, bisphenol A, 1,4-cyclohexanediol, 1,4-cyclohexanedimethanol and mixtures thereof,
- optionally with at least one fatty acid and/or triglyceride(s) thereof comprising a fatty acid comprising one or more hydroxy groups.

Preferably, the polyester polyol in component B is obtained by reacting:

- a polycarboxylic acid selected from glutaric acid, adipic acid, pimelic acid, azelaic acid, isophthalic acid, phthalic acid, terephthalic acid, ester-forming derivatives thereof and mixtures thereof, and
- a polyol selected from ethylene glycol, diethylene glycol, propylene glycol, trimethylolpropane, 1,4-butanediol, 1,6-hexanediol, neopentylglycol and mixtures thereof,
- optionally with at least one fatty acid and/or triglyceride(s) thereof comprising ricinoleic acid.

More preferably, the polyester polyol in component B is obtained by reacting adipic acid and/or isophthalic acid (or an ester-forming derivative thereof), and diethylene glycol and/or trimethylolpropane, optionally with at least one fatty acid and/or triglyceride(s) thereof comprising ricinoleic acid (which may be provided under the form of castor oil).

The polyester polyol present in component B may have a number average molecular weight from 400 g/mol to 2000 g/mol, preferably from 500 g/mol to 1000 g/mol.

The polyester polyol in component B may have a functionality comprised between 2 and 4, preferably between 2 and 3, more preferably between 2.0 and 2.7; the "functionality" of the polyester polyol means the number (or the average number) of hydroxy groups per molecule of polyester polyol.

The total polyester polyol content in component B may vary from 60 % to 98 % by dry weight relative to the total dry weight of component B, preferably from 70 % to 95 % by dry weight, more preferably from 85 % to 95 % by dry weight.

Preferably, component B does not comprise any polyether polyol.

The polyester polyol in component B may be obtained as described above for the crystalline polyester polyol in component A (the optional at least one fatty acid and/or triglyceride(s) thereof being added at the same time as the polyol and polycarboxylic acid).

According to an embodiment, component B comprises at least two polyester polyols, preferably exactly two polyester polyols.

According to this embodiment, preferably at least one polyester polyol is obtained from at least one fatty acid and/or triglyceride(s) thereof, and at least one polyester polyol is not obtained from any fatty acid and/or triglyceride(s) thereof. In this case, the at least one fatty acid and/or triglyceride(s) thereof comprises ricinoleic acid, preferably triglyceride(s) of at least one fatty acid comprising ricinoleic acid.

Furthermore, according to this embodiment, preferably at least one polyester polyol is obtained from an aromatic polycarboxylic acid, and at least one polyester polyol is obtained from an aliphatic polycarboxylic acid. In this case, the aromatic polycarboxylic acid is preferably selected from isophthalic acid, phthalic acid, terephthalic acid, ester-forming derivatives thereof and mixtures thereof, in particular isophthalic acid, and the aliphatic polycarboxylic acid is preferably selected from glutaric acid, adipic acid, pimelic acid, azelaic acid, ester-forming derivatives thereof and mixtures thereof, in particular adipic acid.

According to this embodiment, preferably at least two polyester polyols are obtained from a polyol selected from ethylene glycol, diethylene glycol, propylene glycol, trimethylolpropane, 1,4-butanediol, 1,6-hexanediol, neopentyl-lycol and mixtures thereof, in particular at least one polyester polyol is obtained from diethylene glycol and at least one polyester polyol is obtained from diethylene glycol and trimethylolpropane.

More preferably, according to this embodiment:

- at least one polyester polyol is obtained from:

    - at least one fatty acid and/or triglyceride(s) thereof comprising ricinoleic acid (which may be provided under the form of castor oil),
    - an aromatic polycarboxylic acid preferably selected from isophthalic acid, phthalic acid, terephthalic acid, ester-forming derivatives thereof and mixtures thereof, in particular isophthalic acid, and
    - a polyol selected from ethylene glycol, diethylene glycol, propylene glycol, trimethylolpropane, 1,4-butanediol, 1,6-hexanediol, neopentylglycol and mixtures thereof, in particular diethylene glycol, and

- at least one polyester polyol is not obtained from fatty acid and is obtained from:

    - an aliphatic polycarboxylic acid preferably selected from glutaric acid, adipic acid, pimelic acid, azelaic acid, ester-forming derivatives thereof and mixtures thereof, in particular adipic acid, and
    - a polyol selected from ethylene glycol, diethylene glycol, propylene glycol, trimethylolpropane, 1,4-butanediol, 1,6-hexanediol, neopentylglycol and mixtures thereof, in particular diethylene glycol and trimethylolpropane,

    the weight ratio of the polyester polyol obtained from at least one fatty acid relative to the polyester polyol not obtained from fatty acid being preferably comprised between 0.5 and 3, more preferably between 1.0 and 2.5, such as about 2.

According to this embodiment, preferably at least two polyester polyols have a different functionality, the functionality being preferably between 2 and 3.

## Chain extender in component B

By "chain extender", it is meant a compound comprising at least two, preferably at least three, functional groups being hydroxy and/or amine groups, the amine group(s) being primary and/or secondary amine group(s). Preferably, the chain extender comprises at least one hydroxy group, more preferably at least two hydroxy groups.

The chain extender in component B is different from the crystalline polyester polyol in component A, the polyester polyol in component B and the polyether polyol in component A as described above, and has a molecular weight lower than 300 g/mol. In particular, the chain extender does not comprise more than two repeating units.

Advantageously, the chain extender in component B has a molecular weight comprised between 50 g/mol and 290 g/mol, preferably between 60 g/mol and 200 g/mol, more preferably between 80 g/mol and 200 g/mol.

The chain extender in component B may be selected from 1,4-butanediol, ethylene glycol, diethylene glycol, 1,6-hexanediol, 1,2,3-propanetriol, trimethylolethane, trimethylolpropane, 1,2,6-hexanetriol, triethanolamine, diethanolamine, ethanolamine and mixtures thereof.

Advantageously, the chain extender in component B is selected from 1,2,3-propanetriol, trimethylolethane, trimethylolpropane, 1,2,6-hexanetriol, triethanolamine, diethanolamine, ethanolamine and mixtures thereof, in particular triethanolamine.

The chain extender content in component B may vary from 1 % to 20 % by dry weight relative to the total dry weight of component B, preferably from 2 % to 13 % by dry weight, more preferably from 5 % to 10 % by dry weight.

## Silane coupling agent in component B

By "silane coupling agent", it is intended a compound comprising at least one alkoxysilane group (silicon atom linked to at least one alkoxy group) wherein the silicon atom is linked to a hydrocarbon radical which may comprise one or more heteroatoms. Preferably, the silane coupling agent in component B is not an epoxy silane compound, such as (3-glycidyloxypropyl)trimethoxysilane (GLYMO).

The silane coupling agent in component B may comprise between 1 and 5 alkoxysilane groups, preferably one or two alkoxysilane groups. Each silicon atom is linked to at least one alkoxy group, preferably to at least two alkoxy groups, more preferably to three alkoxy groups. The alkoxy groups may comprise from 1 to 10 carbon atoms, preferably from 1 to 5 carbon atoms, more preferably they can be selected from a methoxy group and an ethoxy group.

Advantageously, the silane coupling agent in component B is an amino-silane compound.

By "amino-silane compound", it is meant a compound comprising at least one alkoxysilane group wherein the silicon atom is linked to at least one amino group via a hydrocarbon chain. The amino group should have at least one hydrogen atom. Therefore, the amino group is a primary or a secondary amine, preferably a primary amine in component B.

In addition, the amino-silane compound may comprise between 1 and 5 amino groups, preferably one or two amino groups. In case more than one amino groups are present on the amino-silane compound, one amino group can be for example a primary amine while another amino group can be a secondary amine.

The amino group is linked to the silicon atom via a hydrocarbon chain. The hydrocarbon chain can comprise from 1 to 20 carbon atoms, preferably from 2 to 10 carbon atoms. The amino group(s) can be part of the hydrocarbon chain (two of the amines substituents are part of the hydrocarbon chain) and/or can be a terminal group (extremity) of the hydrocarbon chain.

According to an embodiment, the silane coupling agent in component B is selected from 1,2-bis(triethoxysilyl) ethane, n-octyltriethoxysilane, 3-aminopropylmethyldiethoxysilane, (3-aminopropyl)triethoxysilane, N-(2-aminoethyl)-3-aminopropyltriethoxysilane, bis(3-(triethoxysilyl)propyl)amine, bis(trimethoxysilylpropyl)amine, (3-aminopropyl)trimethoxysilane, N-(2-aminoethyl)-3-aminopropyltrimethoxysilane, 3-[2-(2-aminoethylamino)ethylamino]propyltrimethoxysilane, 4-amino-3,3-dimethylbutyltrimethoxysilane and mixtures thereof.

Preferably, the silane coupling agent in component B is selected from 3-aminopropylmethyldiethoxysilane, (3-aminopropyl)triethoxysilane, N-(2-aminoethyl)-3-aminopropyltriethoxysilane, bis(3-(triethoxysilyl)propyl)amine, bis(trimethoxysilylpropyl)amine, (3-aminopropyl)trimethoxysilane, N-(2-aminoethyl)-3-aminopropyltrimethoxysilane, 3-[2-(2-aminoethylamino)ethylamino]propyltrimethoxysilane, 4-amino-3,3-dimethylbutyltrimethoxysilane and mixtures thereof.

More preferably, the silane coupling agent in component B is selected from 3-aminopropylmethyldiethoxysilane, (3-aminopropyl)triethoxysilane, (3-aminopropyl)trimethoxysilane, 4-amino-3,3-dimethylbutyltrimethoxysilane and mixtures thereof, in particular (3-aminopropyl)triethoxysilane.

When component A comprises a silane coupling agent, the silane coupling agent in component B may be identical or different from the silane coupling agent in component A. Preferably, the silane coupling agent in component B is different from the silane coupling agent in component A. More preferably, the silane coupling agent in component B is a primary amine and the silane coupling agent in component A is a secondary amine.

The silane coupling agent content in component B may vary from 0.1 % to 10 % by dry weight relative to the total dry weight of component B, preferably from 1 % to 5 % by dry weight, more preferably from 2 % to 4 % by dry weight.

## Other features of component B

The component B may further comprise one or more additives. Such additives may be selected from catalysts, fillers, plasticizers, tackifying resins, UV stabilizers, moisture absorbers, rheological additives and mixtures thereof.

The catalyst may be selected from tetra-n-butyl titanate, ethylene glycol titanium, antimony trioxide, tetraisopropyl titanate and zinc acetate, preferably tetra-n-butyl titanate.

When a catalyst is added in component B, the catalyst content in component B may vary from 0.01 % to 0.05 % by dry weight relative to the total dry weight of component B.

The total content of additives in component B can range up to 10 % by dry weight relative to the total dry weight of component B, preferably up to 5 % by dry weight, more preferably up to 2 % by dry weight.

The component B may further comprise a solvent, but the component B preferably is solvent-free.

By "solvent", it is intended a solvent used in the field of adhesives, in particular, water, ethanol, isopropanol, ethyl acetate, butyl acetate, acetone, butanone, methyl isobutyl ketone, tetrahydrofuran, cyclohexane, benzene, toluene, xylene, etc.

According to an embodiment, component B comprises:

- from 60 % to 98 % by dry weight of at least one polyester polyol, preferably at least two polyester polyols,
- from 1 % to 20 % by dry weight of chain extender,
- from 0.1 % to 10 % by dry weight of silane coupling agent, and
- up to 10 % by dry weight of one or more additives selected from catalysts, fillers, plasticizers, tackifying resins, UV stabilizers, moisture absorbers, rheological additives and mixtures thereof,
  the percentages being relative to the total dry weight of component B.

Preferably, component B consists essentially of the above ingredients. By "consists essentially of', it is intended that component B comprises less than 5 % by dry weight of ingredients other than the above ingredients, relative to the total dry weight of component B, preferably less than 2 % by dry weight, more preferably less than 1 % by dry weight.

The ingredients of this embodiment and their specific contents are as described above, including the embodiments.

According to a specific embodiment, component B comprises:

- from 85 % to 95 % by dry weight of at least one polyester polyol, preferably at least two polyester polyols, the polyester polyol(s) being preferably obtained by reacting:

  - a polycarboxylic acid selected from glutaric acid, adipic acid, pimelic acid, azelaic acid, isophthalic acid, phthalic acid, terephthalic acid, ester-forming derivatives thereof and mixtures thereof, and
  - a polyol selected from ethylene glycol, diethylene glycol, propylene glycol, trimethylolpropane, 1,4-butanediol, 1,6-hexanediol, neopentylglycol and mixtures thereof,
  - optionally with at least one fatty acid and/or triglyceride(s) thereof comprising ricinoleic acid (which may be provided under the form of castor oil).

- from 2 % to 13 % by dry weight of chain extender, the chain extender being preferably selected from 1,2,3-propanetriol, trimethylolethane, trimethylolpropane, 1,2,6-hexanetriol, triethanolamine, diethanolamine, ethanolamine and mixtures thereof,
- from 2 % to 4 % by dry weight of silane coupling agent, the silane coupling agent being preferably an amino-silane compound, and
- up to 2 % by dry weight of one or more additives selected from catalysts, fillers, plasticizers, tackifying resins, UV stabilizers, moisture absorbers, rheological additives and mixtures thereof,

  the percentages being relative to the total dry weight of component B.

Preferably, component B consists essentially of the above ingredients.

The ingredients of this embodiment and their specific contents are as described above, including the embodiments.

In order to make component B, the above-mentioned compounds can be mixed together, preferably under inert atmosphere such as nitrogen.

According to a preferred embodiment, the at least one polyester polyol can first be mixed with the chain extender. Then, the silane coupling agent can be added to this mixture. For example, the at least one polyester polyol can be mixed with the chain extender for a duration comprised between 10 minutes and 2 hours, preferably between 20 minutes and 1 hour, prior to the addition of the silane coupling agent.

The temperature during mixing may vary from 30°C to 80°C, preferably from 40°C to 70°C. The temperature may remain stable or may vary during the mixing of the different compounds to obtain component B.

Component B may have a hydroxyl value comprised between 50 and 500 mg KOH per gram of composition B, preferably between 100 and 300 mg KOH/g, more preferably between 200 and 250 mg KOH/g.

The hydroxyl value of component B may be measured according to ISO 14900-17 (method A).

Component B may also have a viscosity at 25°C comprised between 1000 mPa.s and 15000 mPa.s, preferably between 1500 mPa.s and 10000 mPa.s, more preferably between 2000 mPa.s and 5000 mPa.s. Viscosity can be measured using a Brookfield LVT viscometer and using the standard EN ISO 2555 (2018).

**Preparation and features of the two-component composition**

The two-component composition according to the invention can be made when component A is mixed with component B. When these two components are mixed, the hydroxy groups of the at least one polyester polyol and chain extender present in component B can react with the isocyanate extremities of the urethane prepolymer of component A to form a polyurethane adhesive.

The presence of one or more silane coupling agents in the two-component composition makes it possible to increase the adhesive strength of the composition with its substrate as the alkoxy groups of the silane can react with the substrate on which the adhesive is coated.

The NCO:OH mole ratio in the two-component composition according to the invention (NCO molar content in component A to OH molar content in component B) may vary from 0.5 to 10, preferably from 1.0 to 5, more preferably from 1.0 to 3.

When component A is mixed with component B, the two-component composition may have a pot life at 55°C comprised between 20 min and 40 min. The pot life corresponds to the time it takes for the composition (obtained after mixing components A and B) to reach a viscosity of 3000 cP (which can be measured with a Brookfield LVT viscometer and using the standard EN ISO 2555 (2018)).

The two-component composition according to the invention may comprise a solvent, but is preferably solvent-free.

Advantageously, the two-component composition according to the invention is free of primary aromatic amines.

Furthermore, the two-component composition according to the invention is also advantageously free of epoxy silane compounds, such as (3-glycidyloxypropyl)trimethoxysilane (GLYMO).

## Use of the two-component composition

The two-component composition can be applied on the surface of a substrate. The substrates may be selected from paper, metal, for example, aluminum and thermoplastic polymers, such as:

- polyethylene (PE),
- polypropylene (PP), in particular cast polypropylene (CPP) or retort grade cast polypropylene (RCPP),
- a copolymer based on ethylene and on propylene,
- polyamide (PA), in particular nylon,
- polyethylene terephthalate (PET),
- a copolymer based on ethylene, such as, for example, a maleic anhydride-grafted copolymer, a copolymer of ethylene and of vinyl acetate (EVA), a copolymer of ethylene and of vinyl alcohol (EVOH) or a copolymer of ethylene and of an alkyl acrylate, such as methyl acrylate (EMA) or butyl acrylate (EBA),
- polystyrene (PS),
- polyvinyl chloride (PVC),
- polyvinylidene fluoride (PVDF),
- a polymer or copolymer of lactic acid (PLA), or
- a polyhydroxyalkanoate (PHA).

When two substrates are implemented, they are preferably different.

Preferably, the substrates are selected from aluminum, PP and PA, more preferably from aluminum, RCPP and nylon.

According to an embodiment, one of the two components (A or B) can first be applied on the surface of the substrate, and then the second of the two components can be applied on the surface of the substrate on top of the first component. In this case, the reaction between component A and component B occurs on the surface of the substrate.

According to a preferred embodiment, component A is mixed with component B prior to applying the two-component composition on the surface of the substrate. In this case, component A can be mixed with component B at a temperature ranging from 40°C to 70°C, preferably from 45°C to 60°C. Then, the composition on the surface of the substrate can be applied at a temperature ranging from 40°C to 70°C, preferably from 45°C to 60°C, and curing can be achieved at a temperature ranging from 40°C to 60°C for a duration comprised between 3 and 5 days.

In both cases, the two-component composition can form a layer on the surface of the substrate. This layer can correspond to a proportion of an amount of less than 7 g/m$^2$ (i.e. less than 7 g of the two-component composition per m$^2$ of the surface of the substrate), preferably from 0.5 g/m$^2$ to 5 g/m$^2$, more preferably from 1 g/m$^2$ to 4 g/m$^2$.

According to a preferred embodiment, the two-component composition according to the invention can be used as an adhesive composition, in order to bond two substrates together. Thus, after curing, the composition can form an adhesive layer maintaining two substrates together. More particularly, after applying the two-component composition on the surface of a substrate, the surface of an additional substrate can be brought into contact with the coated surface, so as to bond the two substrates.

In particular, when the two-component composition according to the invention is used as an adhesive composition, it may be implemented in a laminating machine.

According to another embodiment, the two-component composition according to the invention can be used as a coating on the surface of a substrate. Thus, after curing, the composition may form a layer covering the surface of the substrate in order, for example, to modify one or more properties of its surface.

Thus, the invention relates to an article, in particular a multilayer film, comprising at least one surface coated with the two-component composition according to the invention.

When the two-component composition is used as a coating, it is an outer surface of the article.

When the two-component composition is used as an adhesive, it is an internal surface of the article, i.e. a surface of the article that is in contact with, for example, another surface of the article, the two-component composition lying between these two surfaces.

Such article may be obtained by a method comprising:

- applying the two-component composition according to the invention on at least one surface of a substrate,
- optionally bringing said surface into contact with the surface of an additional substrate, and
- curing the two-component composition according to the invention.

The substrate is as described above.

After application and curing, the article comprising the layer made from the two-component composition of the invention may be subjected to a post-treatment, such as a sterilization post-treatment. This may include a retort or steam treatment. In particular, the article may be subjected to heating in the presence of water, for instance at a temperature of from 110 to 140°C (in particular at about 121°C) for a duration of from 10 minutes to 2 hours (in particular, from 30 min to 50 min, such as about 40 min). This may be performed in an autoclave machine. The article may be in particular a multilayer film, which can be under the form of a pouch.

Therefore, the two-component composition according to the invention may be used as an adhesive to manufacture an article, in particular a multilayer film, having a bonding strength value after sterilization (e.g. at 121°C for 40 min) greater than or equal to 3.5 N/15mm, preferably greater than or equal to 4.0 N/15mm, more preferably greater than or equal to 4.5 N/15mm. The article is as described above. The bonding strength value can be measured according to GB/T 8808-1988 Test Method for Peel Force of Flexible Laminated Plastics, in particular as described in Example 1.

The invention also relates to a multilayer film comprising at least two layers of substrates bonded together by a continuous layer, wherein said continuous layer consists of the two-component composition according to the invention, in particular in a proportion of an amount of less than 7 g/m$^2$ (i.e. less than 7 g of the two-component composition per m$^2$ of the surface of the substrate), preferably from 0.5 g/m$^2$ to 5 g/m$^2$, more preferably from 1 g/m$^2$ to 4 g/m$^2$.

The substrates surrounding the two-component composition layer are generally selected from the substrates mentioned above and are preferably different.

Preferably, the substrates surrounding the two-component composition layer are selected from aluminum, PP and PA, more preferably from aluminum, RCPP and nylon.

The thickness of the two layers of substrate adjacent to the two-component composition layer and of other layers employed in the multilayer film according to the invention may vary within a wide range extending from 5 to 150 μm, preferably from 7 to 80 μm. The total thickness of said multilayer film may also vary within a wide range extending from 20 to 400 μm.

According to a preferred embodiment, the multilayer film according to the invention has from two to four layers of substrates, said film then being respectively called two-layer, three-layer or four-layer, preferably three or four layers of substrates.

According to a particular embodiment, said film is chosen from:

- a three-layer film being (PET/aluminum)/RCPP, the two-component composition according to the invention bonding aluminum and RCPP, and
- a four-layer film being (PET/ aluminum)/nylon/RCPP, the two-component composition according to the invention bonding aluminum and nylon, and nylon and RCPP.

Finally, the invention relates to the use of the multilayer film according to the invention for the manufacture of flexible packaging. Indeed, the multilayer film according to the invention can be used for the manufacture of the most varied flexible packaging, which are formed and then closed (after the stage of putting the product intended for the consumer in a proper state) by heat-sealing (or heat-welding) techniques. Preferably, the multilayer film according to the invention is used for the manufacture of a food packaging.

According to a preferred embodiment, the multilayer film according to the invention is used for the manufacture of flexible packaging intended for sterilization treatments, such as the sterilization of foodstuffs put in said flexible packaging.

All the embodiments described above can be combined with each other. In particular, the various aforementioned ingredients in the two-component composition, and in particular the preferred embodiments, can be combined with each other.

The following examples illustrate the invention without limiting it.

## EXAMPLES

### Example 1: Materials and methods

Materials

The following materials were implemented:

- polyester A, obtained from adipic acid (AA), isophtalic acid (IPA) and diethylene glycol (DEG) with a molar ratio AA:IPA:DEG being 1:1:2.7, is a polyester polyol having an OH value of 133-148 mg KOH/g, a number average molecular weight of 800 g/mol, a functionality equal to 2 (meaning that polyester A has an average of 2 -OH groups per molecule) and which is non-crystalline;
- polyester B, obtained from isophtalic acid (IPA), diethylene glycol (DEG) and castor oil with a molar ratio IPA:DEG:castor oil being 1:1.5:1, is a polyester polyol having an OH value of 158-172 mg KOH/g, a number average molecular weight of 750 g/mol and a functionality equal to 2.2 (meaning that polyester B has an average of 2.2 -OH groups per molecule);

- polyester C1, obtained from adipic acid (AA) and butane-1,4-diol (BDO) with a molar ratio AA:BDO being 1:1.23, is a polyester polyol having an OH value of 107-117 mg KOH/g, a number average molecular weight of 1000 g/mol, a functionality equal to 2 (i.e. 2 -OH groups per molecule) and which is crystalline;
- polyester C2, obtained from adipic acid (AA) and butane-1,4-diol (BDO) with a molar ratio AA:BDO being 1:1.11, is a polyester polyol having an OH value of 54-58 mg KOH/g, a number average molecular weight of 2000 g/mol, a functionality equal to 2 (i.e. 2 -OH groups per molecule) and which is crystalline;
- polyester C3, obtained from adipic acid (AA) and butane-1,4-diol (BDO) with a molar ratio AA:BDO being 1:1.07, is a polyester polyol having an OH value of 35-39 mg KOH/g, a number average molecular weight of 3000 g/mol, a functionality equal to 2 (i.e. 2 -OH groups per molecule) and which is crystalline;
- polyester C4, obtained from adipic acid (AA) and butane-1,4-diol (BDO) with a molar ratio AA:BDO being 1:1.35, is a polyester polyol having an OH value of 153-167 mg KOH/g, a number average molecular weight of 700 g/mol, a functionality equal to 2 (i.e. 2 -OH groups per molecule) and which is crystalline;
- ETEROL 5103 commercialized by Eternal Materials, polyester polyol obtained from adipic acid, diethylene glycol and trimethylolpropane, having a functionality equal to 2.5 (i.e. an average of 2.5 -OH groups per molecule);
- VORANOL™ 1000LM (PPG 1000 diol) commercialized by Dow, polyether polyol (polypropylene glycol) having a number average molecular weight of 1000 g/mol and a functionality equal to 2 (i.e. 2 -OH groups per molecule);
- CHE-204 (PPG 400 diol) commercialized by Changhua Chemical, polyether polyol (polypropylene glycol) having a number average molecular weight of 400 g/mol and a functionality equal to 2 (i.e. 2 -OH groups per molecule);
- VORANOL™ CP 450 (PPG 450 triol) commercialized by Dow, polyether polyol (polypropylene glycol) having a number average molecular weight of 450 g/mol and a functionality equal to 3 (i.e. 3 -OH groups per molecule);
- trimethylolpropane (TMP) commercialized by Perstorp, chain extender having a functionality equal to 3 (i.e. 3 -OH groups per molecule);
- butane-1,4-diol (BDO) commercialized by Xinjiang Markor Chemical Industry, low molecular weight polyol having a functionality equal to 2 (i.e. 2 -OH groups per molecule);
- isophorone diisocyanate (IPDI) commercialized by Wanhua, polyisocyanate having a -NCO content of 37.5 % by weight on the total weight of IPDI;
- Desmodur® 2460 M (MDI) commercialized by Covestro, mixture comprising at least 39.2 wt% of 4,4'-methylene diphenyl diisocyanate and about 55 wt% of 2,4'-methylene diphenyl diisocyanate, polyisocyanate having a -NCO content of 33.5 % by weight on the total weight of MDI;
- Dynasylan® 1124 commercialized by Evonik, bis(trimethoxysilylpropyl)amine, silane coupling agent;
- Silquest A-1100 (AMEO) commercialized by MOMENTIVE, (3-aminopropyl)triethoxysilane, silane coupling agent;
- Silquest A-187 (GLYMO) commercialized by MOMENTIVE, (3-glycidyloxypropyl)trimethoxysilane, silane coupling agent;
- triethanolamine commercialized by Titan chemical, analytical reagent grade, chain extender.

Preparation of polyesters A, B, C1, C2, C3 and C4

A reactor was charged under nitrogen atmosphere with the raw materials used to obtain the polyester polyol as indicated above (e.g. adipic acid and butane-1,4-diol with a molar ratio AA:BDO being 1:1.23 for polyester C1), and heated to about 150°C to start discharging the water generated by the reaction. Then, a catalyst (e.g. tetra-n-butyl titanate) was added to the reactor and the temperature was increased to about 230°C. When the water to be discharged reached 95% of the theoretical amount, vacuum was started, and the reaction was carried out at 85-90 kPa. The reaction was stopped when the acid value was lower than 2.0 mg KOH/g (measured according to ISO 2114-2000, method A).

The hydroxyl value of each polyester was measured according to ISO 14900-17 (method A), and the number average molecular weight of each polyester was measured by size exclusion chromatography (or SEC) with a polystyrene calibration.

Preparation of component A

Component A was prepared as described below:
A reactor was charged under stirring and under nitrogen atmosphere with polyols and the temperature was set between 50°C and 60°C. The reactor was then charged with IPDI and kept at 80°C for 3 hours (or was charged with MDI and kept at 80°C for 1.5 hours for comparative composition CE1). Then, Dynasylan® 1124 was optionally added to the reactor and the temperature was kept for 30 minutes at 75-80°C. The temperature was then lowered to below 50°C.
The NCO content of component A was measured according to the standard ASTM D2572 (2010), and the viscosity was measured with a Brookfield LVT viscometer and using the standard EN ISO 2555 (2018).

Preparation of component B

Component B was prepared as described below:
A reactor was charged under nitrogen atmosphere with polyols and triethanolamine, and the temperature was set at 50°C-60°C and kept under stirring for 30 minutes. Then, AMEO was added to the reactor and left under stirring for 30 minutes.
Alternatively, when GLYMO is added instead of AMEO: the reactor was charged with polyols and GLYMO, and the mixture is stirred at 50°C for 1h.
The hydroxyl value of component B was measured according to ISO 14900-17 (method A), and the viscosity was measured with a Brookfield LVT viscometer and using the standard EN ISO 2555 (2018).

Preparation of a two-component composition and application

Component A was then mixed with component B at a temperature of 55°C (or 45°C for composition CE1).
The pot life at 55°C (or at 45°C for composition CE1) was measured and corresponds to the time it takes for the composition (obtained after mixing components A and B) to reach a viscosity of 3000 cP (measured with a Brookfield LVT viscometer and using the standard EN ISO 2555 (2018)).
The two-component composition was used as an adhesive on a substrate comprising the following layers: polyethylene terephthalate (PET), aluminum (AL) and retort cast polypropylene (RCPP), and applied between AL and RCPP: (PET/AL)//RCPP; the PET and AL layers were received already bonded. The weight of the coating is around 2 g/m$^2$. After being laminated at 55°C (or at 45°C for composition CE1), the final laminated substrate is cured into an oven at a temperature of 50°C for 3 or 5 days.
The two-component composition was also used as an adhesive on a substrate comprising the following layers: PET, AL, nylon (NY) and RCPP, and applied between AL and NY, and between NY and RCPP: (PET/AL)//NY//RCPP. The weight of the coating is around 2 g/m$^2$. After being laminated at 55°C, the final laminated substrate is cured into an oven at a temperature of 50°C for 3 or 5 days.
Each of the laminated substrates was then formed into a pouch (20cmx10cm) by thermosealing (about 170-180°C), and each pouch was filled with 100 mL of water and subjected to sterilization in an autoclave at 121°C for 40 min. The bonding strength value (BSV) of the adhesive was then measured after retort according to GB/T 8808-1988 Test Method for Peel Force of Flexible Laminated Plastics. More particularly, after retort, a strip having a width of 15 mm was cut from the pouch and the bonding strength was tested under 90 degrees at 300 mm/min using a tensile machine (90° T-peel test). All bonding strength values are the average of three test results in the mechanical direction.

**Example 2: Properties of compositions according to the invention and comparative compositions**

Components A for two-component compositions 1 to 6 according to the invention and two-component comparative compositions CE1 to CE3 were prepared with the ingredients of Table 1 as described in Example 1 "Preparation of component A" (polyester A, polyesters C1-C4, PPG 1000 diol, PPG 400 diol and BDO are the polyols mentioned in the preparation process). The percentages for each ingredient are percentages by weight based on the total weight of component A. The NCO content is a weight percentage based on the total weight of component A.

Table 1: Component A

|  | A1 inv. | A2 inv. | A3 inv. | A4 inv. | A5 comp. | A6 comp. | A7 comp. |
|---|---|---|---|---|---|---|---|
| Polyester A (%) | / | / | / | / | 10 | 9 | / |
| Polyester C1 (%) | 9 | / | 9 | / | / | / | / |
| Polyester C2 (%) | / | / | / | 9 | / | / | / |

(continued)

| | A1 inv. | A2 inv. | A3 inv. | A4 inv. | A5 comp. | A6 comp. | A7 comp. |
|---|---|---|---|---|---|---|---|
| Polyester C3 (%) | / | / | / | / | / | / | 9 |
| Polyester C4 (%) | / | 9 | / | / | / | / | / |
| PPG 1000 diol (%) | / | / | / | / | 14 | / | / |
| PPG 400 diol (%) | 26 | 26 | 27 | 26 | 10 | 26 | 26 |
| BDO (%) | 2 | 2 | 2 | 2 | / | 2 | 2 |
| Dynasylan® 1124 (%) | 1 | 1 | / | 1 | 1 | 1 | 1 |
| IPDI (%) | 62 | 62 | 62 | 62 | / | 62 | 62 |
| MDI (%) | / | / | / | / | 65 | / | / |
| NCO content | 15.1% | 14.7% | 15.0% | 15.3% | 16.5% | 14.9% | 15.5% |
| Viscosity (40°C, mPa.s) | 3800 | 4020 | 3920 | 3600 | 1000 | 4015 | 3320 |

Components B for two-component compositions 1 to 6 according to the invention and two-component comparative compositions CE1 to CE3 were prepared with the ingredients of Table 2 as described in Example 1 "Preparation of component B" (polyester A, polyester B, Eternal 5103, PPG 450 triol and TMP are the polyols mentioned in the preparation process). The percentages for each ingredient are percentages by weight based on the total weight of component B.

Table 2 : Component B

| | B1 inv. | B2 inv. | B3 comp. |
|---|---|---|---|
| Polyester A (%) | / | / | 76 |
| Polyester B (%) | 60 | 70 | / |
| ETEROL 5103 (%) | 30 | 20 | / |
| PPG 450 triol (%) | / | / | 20 |
| TMP (%) | / | / | 2.5 |
| AMEO (%) | 3 | 3 | / |
| GLYMO (%) | / | / | 1.5 |
| Triethanolamine (%) | 7 | 7 | / |
| OH value (mg KOH/g) | 235 | 230 | 210 |
| Viscosity (25°C, mPa.s) | 3100 | 2980 | 1100 |

Then, the two-component compositions were prepared and their properties were evaluated as described in Example 1 "Preparation of a two-component composition and application" and are set forth in Table 3 below.

Table 3: Properties of the two-component compositions

| | 1 inv. | 2 inv. | 3 inv. | 4 inv. | 5 inv. | 6 inv. | CE1 comp. | CE2 comp. | CE3 comp. |
|---|---|---|---|---|---|---|---|---|---|
| Component A | A1 | A1 | A1 | A3 | A4 | A2 | A5 | A6 | A7 |
| Component B | B1 | B1 | B2 | B1 | B1 | B1 | B3 | B1 | B1 |
| NCO:OH mole ratio | 1.3:1 | 1.7:1 | 1.3:1 | 1.3:1 | 1.3:1 | 1.3:1 | 1.8:1 | 1.3:1 | 1.3:1 |
| 55°C-Pot life (min) | 27 | 30 | 27 | 27 | 26 | 27 | 36* | 24 | 26 |
| Curing time at 50°C (days) | 5 | 5 | 5 | 5 | 5 | 5 | 3 | 5 | 5 |

(continued)

|  | 1 inv. | 2 inv. | 3 inv. | 4 inv. | 5 inv. | 6 inv. | CE1 comp. | CE2 comp. | CE3 comp. |
|---|---|---|---|---|---|---|---|---|---|
| BSV AL/RCPP (N/15 mm) | 5.0 | 7.5 | 4.5 | 4.5 | 6.0 | 5.2 | 6.0 | 3.8 | 4.3 |
| BSV AL/NY (N/15 mm) | 4.5 | 4.8 | 4.5 | 4.0 | 4.8 | 4.8 | 5.0 | 3.4 | 3.3 |
| BSV NY/RCPP (N/15 mm) | 5.4 | 5.5 | 4.9 | 4.8 | 5.8 | 5.0 | 4.8 | 4.7 | 4.3 |
| *Pot life at 45°C | | | | | | | | | |

Table 3 shows that after sterilization all the two-component compositions according to the invention have a bonding strength value (BSV) greater than or equal to 3.5 N/15mm, and most have a BSV greater than or equal to 4.5 N/15mm (except for composition 4 with AL/NY which is slightly lower). A BSV ≥ 3.5 N/15mm corresponds to a semi-high temperature cooking grade and a BSV ≥ 4.5 N/15mm corresponds to a high temperature cooking grade according to state standard GB/T 10004-2008.

Therefore, all the two-component compositions according to the invention have good adhesive properties even after sterilization, which means that they have a good thermal resistance.

However, comparative composition CE2 wherein component A was obtained from a non-crystalline polyester polyol (polyester A) exhibits significant lower BSV than compositions 1, 5 and 6 according to the invention, which comprise respectively in component A crystalline polyester polyol C1, C2 and C4, for all the tested substrates.

Therefore, replacing a non-crystalline polyester polyol in component A by a crystalline polyester polyol leads to improvement in the BSV after sterilization.

Furthermore, comparative composition CE3 wherein component A was obtained from a crystalline polyester polyol having a number average molecular weight of 3000 g/mol (polyester C3) exhibits significant lower BSV than compositions 1, 5 and 6 according to the invention, which comprise respectively in component A crystalline polyester polyol C1, C2 and C4 having number average molecular weights below 3000 g/mol, for all the tested substrates.

Therefore, the number average molecular weight of the crystalline polyester polyol in component A has an effect on the BSV after sterilization.

Finally, compared to comparative composition CE1 which was obtained from MDI (aromatic polyisocyanate) and GLYMO (epoxysilane), compositions 2 and 5 according to the invention yield similar or even better BSV after sterilization, with the further advantage that the compositions according to the invention are free of primary aromatic amines and epoxysilanes.

## Claims

1. A two-component composition comprising:

   - a component A comprising a reaction product obtained by reacting at least:

      - an aliphatic polyisocyanate, and
      - a crystalline polyester polyol having a number average molecular weight of less than 3000 g/mol; and

   - a component B comprising:

      - at least one polyester polyol,
      - a chain extender, and
      - a silane coupling agent.

2. The two-component composition according to claim 1, wherein the aliphatic polyisocyanate is selected from isophorone diisocyanate (IPDI), dicyclohexylmethane 4,4'-diisocyanate (H12MDI), 1,4-cyclohexylene diisocyanate, 1,2-cyclohexylene diisocyanate, 2,4-diisocyanato-1-methylcyclohexane, 1,3-diisocyanato-2-methylcyclohexane, meta-xylylene diisocyanate (m-XDI), hydrogenated meta-xylylene diisocyanate (m-H6XDI), tetramethylxylene diisocyanate (TMXDI), 1,2-ethylene diisocyanate, 1,3-propylene diisocyanate, 1,4-butylene diisocyanate, 1,5-pentamethylene diisocyanate (PDI), 1,6-hexamethylene diisocyanate (HDI), and mixtures thereof.

3.  The two-component composition according to claim 1 or 2, wherein the crystalline polyester polyol in component A is obtained by reacting:

    - a polycarboxylic acid selected from succinic acid, glutaric acid, adipic acid, pimelic acid, suberic acid, azelaic acid, sebacic acid, 1,12-dodecanedioic acid, fumaric acid or dimer thereof, maleic acid or dimer thereof, 1,4-cyclohexanedicarboxylic acid, isophthalic acid, phthalic acid, terephthalic acid, ester-forming derivatives thereof and mixtures thereof, and
    - a polyol selected from ethylene glycol, diethylene glycol, triethylene glycol, propylene glycol, 1,3-propanediol, dipropylene glycol, 1,2-butanediol, 1,3-butanediol, 1,4-butanediol, 1,6-hexanediol, neopentylglycol, bisphenol A, 1,4-cyclohexanediol, 1,4-cyclohexanedimethanol and mixtures thereof.

4.  The two-component composition according to any one of claims 1 to 3, wherein the reaction product in component A is obtained by reacting the aliphatic polyisocyanate and the crystalline polyester polyol at least also with a polyether polyol.

5.  The two-component composition according to claim 4, wherein the polyether polyol is selected from polyethylene glycol, polypropylene glycol, poly(tetramethylene ether) glycol (PTMEG) and copolymers thereof such as block copolymer of polyethylene glycol and polypropylene glycol.

6.  The two-component composition according to any one of claims 1 to 5, wherein the reaction product in component A is obtained by reacting the aliphatic polyisocyanate and the crystalline polyester polyol at least also with a low molecular weight polyol.

7.  The two-component composition according to any one of claims 1 to 6, wherein the component A further comprises a silane coupling agent.

8.  The two-component composition according to any one of claims 1 to 7, wherein the polyester polyol in component B is obtained by reacting:

    - a polycarboxylic acid selected from succinic acid, glutaric acid, adipic acid, pimelic acid, suberic acid, azelaic acid, sebacic acid, 1,12-dodecanedioic acid, fumaric acid or dimer thereof, maleic acid or dimer thereof, 1,4-cyclohexanedicarboxylic acid, isophthalic acid, phthalic acid, terephthalic acid, ester-forming derivatives thereof and mixtures thereof, and
    - a polyol selected from ethylene glycol, diethylene glycol, triethylene glycol, propylene glycol, 1,3-propanediol, trimethylolpropane, dipropylene glycol, 1,2-butanediol, 1,3-butanediol, 1,4-butanediol, 1,6-hexanediol, neopentylglycol, bisphenol A, 1,4-cyclohexanediol, 1,4-cyclohexanedimethanol and mixtures thereof,
    - optionally with at least one fatty acid and/or triglyceride(s) thereof comprising a fatty acid comprising one or more hydroxy groups.

9.  The two-component composition according to any one of claims 1 to 8, wherein the component B comprises at least two polyester polyols, preferably exactly two polyester polyols.

10. The two-component composition according to any one of claims 1 to 9, wherein the chain extender in component B is selected from 1,4-butanediol, ethylene glycol, diethylene glycol, 1,6-hexanediol, 1,2,3-propanetriol, trimethylolethane, trimethylolpropane, 1,2,6-hexanetriol, triethanolamine, diethanolamine, ethanolamine and mixtures thereof.

11. The two-component composition according to any one of claims 1 to 10, wherein the silane coupling agent in component B is an amino-silane compound.

12. The two-component composition according to any one of claims 1 to 11, being free of primary aromatic amines.

13. Use of the two-component composition according to any one of claims 1 to 12 as an adhesive to manufacture an article, in particular a multilayer film, having a bonding strength value after sterilization greater than or equal to 3.5 N/15mm.

14. Multilayer film comprising at least two layers of substrates bonded together by a continuous layer, wherein said continuous layer consists of the two-component composition according to any one of claims 1 to 12.

15. Use of the multilayer film according to claim 14 for the manufacture of flexible packaging intended for sterilization treatments, such as the sterilization of foodstuffs put in said flexible packaging.

Europäisches
Patentamt

European
Patent Office

Office européen
des brevets

# EUROPEAN SEARCH REPORT

Application Number

EP 22 30 6044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 234 842 A1 (MITSUI TAKEDA CHEMICALS INC [JP]) 28 August 2002 (2002-08-28) * examples 7-10 * * Comparative example 3 * ----- | 1-15 | INV. C08G18/75 C08G18/42 C09J175/06 B32B7/12 |
| A | EP 3 819 321 A1 (BOSTIK SA [FR]) 12 May 2021 (2021-05-12) * claim 1 * ----- | 1-15 | C08G18/12 |

TECHNICAL FIELDS
SEARCHED       (IPC)

C08G
C09J
B32B

The present search report has been drawn up for all claims

| Place of search | Date of completion of the search | Examiner |
|---|---|---|
| Munich | 8 December 2022 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6044

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2022

| Patent document cited in search report | | Publication date | Patent family member(s) | | Publication date |
|---|---|---|---|---|---|
| EP 1234842 | A1 | 28-08-2002 | AT | 325145 T | 15-06-2006 |
| | | | DE | 60211049 T2 | 30-11-2006 |
| | | | EP | 1234842 A1 | 28-08-2002 |
| | | | ES | 2258573 T3 | 01-09-2006 |
| | | | JP | 2002249745 A | 06-09-2002 |
| | | | US | 2002157789 A1 | 31-10-2002 |
| EP 3819321 | A1 | 12-05-2021 | CN | 114729093 A | 08-07-2022 |
| | | | EP | 3819321 A1 | 12-05-2021 |
| | | | WO | 2021089709 A1 | 14-05-2021 |

EPO FORM P0459

For more details about this annex : see Official Journal of the European Patent Office, No. 12/82